# EUROPÄISCHE PATENTSCHRIFT

(11) **EP 2 892 692 B1**
(45) Veröffentlichungstag und Bekanntmachung des Hinweises auf die Patenterteilung: **08.03.2017**
(21) Anmeldenummer: 13759741.5
(22) Anmeldetag: 09.09.2013
(51) Int. Cl.: B25H 1/02

(54) **VERSCHIEBESYSTEM FÜR EINEN MONTAGE- ODER SCHWEISSTISCH**
DISPLACEMENT SYSTEM FOR AN ASSEMBLY BENCH OR A WELDING BENCH
SYSTÈME DE DÉPLACEMENT D'UNE TABLE DE MONTAGE OU DE SOUDAGE

(30) Priorität: 10.09.2012 DE 102012216020
(43) Veröffentlichungstag der Anmeldung: 15.07.2015
(73) Patentinhaber: Demmeler Automatisierung und Roboter GmbH, 87751 Heimertingen (DE)
(72) Erfinder: DEMMELER, Johannes, 87700 Memmingen/Amendingen (DE)
(74) Vertreter: MERH-IP Matias Erny Reichl Hoffmann Patentanwälte PartG mbB
(86) Internationale Anmeldenummer: PCT/EP2013/068641
(87) Internationale Veröffentlichungsnummer: WO 2014/037568

(56) Entgegenhaltungen:
- DE-U1-202006 011 216
- US-A- 6 079 703
- US-A1- 2010 301 538

## Beschreibung

Die Erfindung betrifft ein Verschiebesystem für einen Montage- oder Schweißtisch, um die Größe des Arbeitsfeldes durch Verschieben des Montage- oder Schweißtisches oder weiterer Aufnahmeelemente schnell an das zu bearbeitende Werkstück anpassen zu können.

Aus dem Stand der Technik sind sogenannte Spannsysteme oder 3D-Spannsysteme für den Vorrichtungsbau bekannt. Derartige Spannsysteme basieren auf einem Montage- oder Schweißtisch, auch als Zurichttisch oder 3D-Arbeitstisch bezeichnet, der in der Tischplatte sowie entlang der Tischkanten angeordnete und unmittelbar zur Aufnahme von Spannelementen dienende zylindrische Durchgangsbohrungen aufweist, die gleichmäßig in vorbestimmten Abständen über die Oberfläche verteilt sind. Ein derartiger Tisch ist beispielsweise aus der EP-A 05 41 904 B1 bekannt. Ein oder mehrere Montagetische mit einem derartigen Lochrastersystem oder Rasterbohrungen bilden in Verbindung mit verschiedensten Anschlag-, Spann- und Positionierelementen ein 3D-Spannsystem, mittels dem in kürzester Zeit auf dem Tisch sehr komplexe und modulare Vorrichtungen aufgebaut werden können. 3D-Spannsysteme kommen beispielsweise im Stahlbau, der Blechbearbeitung, der Robotertechnologie, wie auch beim Laserschweißen, Laserschneiden, und Prototypen- oder Karosseriebau zum Einsatz.

Beim Aufbau oder der Bearbeitung einer Vorrichtung ist es oftmals notwendig, das zur Verfügung stehende Arbeitsfeld anzupassen. Beispielsweise kann es erforderlich sein, die auf dem Montagetisch fixierte Vorrichtung an einem anderen Arbeitsplatz weiterzubearbeiten, so dass die Vorrichtung samt Montagetisch bewegt werden muss. In anderen Fällen muss der Montagetisch selbst relativ zum Werkstück verschoben werden, um eine andere Stelle abzustützen oder zu fixieren, oder die zur Verfügung stehende Abstütz- bzw. Montagefläche soll im Laufe der Verarbeitungsschritte vergrößert oder verkleinert werden.

Aus dem Stand der Technik ist bekannt, hierzu auf einer Bodenfläche Befestigungsschienen anzuordnen, an denen der Montagetisch an verschiedenen, vorbestimmten Stellen, beispielsweise gekennzeichnet durch Rasterbohrungen, befestigt werden kann, so dass ein genaues Nachmessen oder Nachjustieren der neuen Tischposition entfällt.

Um die Montagetische jedoch an einer neuen Stelle der Befestigungsschiene befestigen zu können, werde die schweren Montagetische bisher mit einem Kran oder Hubwagen angehoben und an die neue Stelle versetzt.

Diese aus dem Stand der Technik bekannten Ansätze erfordern jedoch schweres Gerät (Kran oder Hubwagen) und ein genaues Positionieren beim Absenken des Montagetisches auf die Montageschiene. Ein weiterer Nachteil ist, dass die Verwendung derartiger Bewegungssysteme zeitaufwendig und aus Platzgründen nicht immer ausführbar ist.

US 6 079 703 offenbart ein Verschiebesystem gemäß dem Oberbegriff des Anspruchs 1.

Es ist deshalb eine Aufgabe der vorliegenden Erfindung, ein Verschiebesystem für einen Montage- oder Schweißtisch bereitzustellen, das ein schnelles, einfaches und sicheres Verschieben des Montagetisches ermöglicht.

Diese Aufgabe wird durch ein Verschiebesystem für einen Montage- oder Schweißtisch gemäß den Merkmalen des Patentanspruchs 1 gelöst. Die abhängigen Patentansprüche betreffen vorteilhafte Ausgestaltungen der Erfindung.

Mit dem erfindungsgemäßen Verschiebesystem kann ein Montagetisch linear entlang eines Schienensystems verschoben werden. Im Sinne dieser Erfindung wird auch ein Schweißtisch, Zurichttisch oder 3D-Arbeitstisch eines Spannsystems als Montagetisch verstanden. Das erfindungsgemäße Verschiebesystem umfasst eine Führungsschiene mit Rasterbohrungen. Das Verschiebesystem kann auch 2, 3 oder mehrere Führungsschienen umfassen, die vorzugsweise parallel und beliebig voneinander beabstandet angeordnet werden können.

Das Verschiebesystem umfasst weiterhin mindestens ein Fußelement für einen Montage- oder Schweißtisch, das an einem ersten Endbereich mit der Führungsschiene in Kontakt bringbar ist, wobei an dem ersten Endbereich eine Aufstandsfläche und ein Abrollmittel angeordnet sind. Die Aufstandsfläche kann in Flächenkontakt mit einer entsprechenden Stützfläche der Führungsschiene gebracht werden, um einen sicheren Stand des Fußelements zu ermöglichen.

Das Verschiebesystem umfasst weiterhin ein Verstellmittel, das mit dem Abrollmittel gekoppelt ist, wobei mittels des Verstellmittels das Abrollmittel von einer ersten Position relativ zur Aufstandsfläche in eine zweite Position relativ zur Aufstandsfläche gebracht werden kann, wobei in der ersten Position die Aufstandsfläche mit der Führungsschiene flächig in Kontakt steht und wobei in der zweiten Position das Fußelement auf der Führungsschiene mittels des Abrollmittels gelagert ist und mittels des Abrollmittels entlang der Führungsschiene linear verfahrbar ist.

Das Verstellmittel ermöglicht somit zwischen einer Stützposition und einer Verfahrposition des Fußelements zu wechseln. In der Stützposition, d.h. der ersten Position des Abrollmittels, stützt sich das Fußelement mit der Aufstandsfläche stabil auf einer entsprechenden Stützfläche der Verfahrschiene auf. Dagegen ist in der Verfahrposition, d.h. der zweiten Position des Abrollmittels, die Aufstandsfläche des Fußes relativ zu dem Abrollmittel leicht angehoben und steht nicht mehr mit der entsprechenden Stützfläche der Verfahrschiene in Kontakt, so dass der Fuß auf dem Abrollmittel linear entlang der Schienen geführt werden kann. Die erfindungsgemäßen Fußelemente erfüllen somit eine Doppelfunktion: sie dienen sowohl als Tragelemente für den Montagetisch und als Verschiebevorrichtung, um den Tisch zu verschieben.

Um das Fußelement in der ersten Position zu fixieren, kann mindestens eine Bohrung oder ein Langloch an dem ersten Endbereich des Fußelements vorgesehen sein, die in Überdeckung mit einer der Rasterbohrungen der Führungsschiene gebracht werden können. Die Bohrung kann auch als Langloch ausgebildet sein. Der Vorteil eines Langloches ist, dass damit eine Feinpositionierung des Fußelements relativ zur Schiene durch Verschiebung innerhalb des Langlochs ermöglicht wird. Mit einem geeigneten Befestigungsmittel, wie z.B. einem Spannbolzen, einer Schraube etc., das in die in Überdeckung gebrachten Bohrungen eingreift, kann das Fußelement auf der Schiene gegen ein Verschieben oder Verrutschen gesichert werden. Hierzu verbindet das Befestigungsmittel die Aufstandsfläche des Fußelements mit der entsprechenden Stützfläche der Führungsschiene kraft- und/oder formschlüssig. Das Fixieren mittels Rasterbohrungen hat den Vorteil, dass das Fußelement schnell an verschiedenen, vorbestimmten Stellen befestigt werden kann, so dass ein genaues Nachmessen oder Nachjustieren der neuen Fuß- bzw. Tischposition entfällt

Das Verstellmittel kann als Feder ausgebildet sein, die so angeordnet ist, dass sie eine vom Spannungszustand der Feder abhängige Kraft auf eine Lagerachse der Rollen ausübt. Weiter vorzugsweise ist die Feder eine Tellerfeder, was eine kompakte Bauhöhe des Verstellmechanismus ermöglicht.

Die Feder kann durch Anziehen des Befestigungsmittels, z.B. eines Spannbolzens, zusätzlich bzw. weiter gespannt werden, so dass das Abrollmittel von der zweiten in die erste Position bewegt werden. Wird die Fixierung zwischen dem Fußelement und Führungsschiene durch Lösen des Befestigungsmittels gelöst, geht die Feder in den vorgespannten Zustand über, so dass die Federkraft die untere Stützfläche des Fußelements von der Führungsschiene leicht anhebt und das Abrollmittel sich von der ersten in die zweiten Position bewegt. Dies hat den Vorteil, dass ein Spannen oder Fixieren bzw. ein Lösen des Befestigungsmittels zugleich das Abrollmittel von der zweiten in die erste Position bzw. von der ersten in die zweite Position überführt.

Bei einer weiteren vorteilhaften Ausgestaltungsform umfasst das Verstellmittel einen Extender, der derart mit dem Abrollmittel gekoppelt ist, dass eine Bewegung des Extenders ein Herausschwenken des Abrollmittels von der ersten in die zweite Position oder von der zweiten in die erste Position bewirkt. Weiter vorzugsweise ist der Extender derart mit der Aufhängung oder Lagerung des Abrollmittels gekoppelt, dass eine Rotation des Extenders eine Hubbewegung der Achse relativ zur unteren Aufstandsfläche des Fußelements bewirkt.

Vorzugsweise umfasst das Abrollmittel Rollen, d.h. um eine Achse drehbare Scheiben, die jeweils eine Linienberührung mit der Führungsschiene in der zweiten Position ausbilden. Um das Fußelement sicher entlang der Führungsschiene zu verfahren, können die Rollen als Spurkranzrollen ausgebildet sein, damit die Rollen linear entlang der Führungsschiene mittels eines Spurkranzes geführt werden.

Gemäß einer weiteren Ausführungsform kann das Abrollmittel mindestens zwei Kugelrollen umfasst. Kugelrollen umfassen ein Gehäuse mit einer gehärteten Kugelpfanne auf der sich viele kleine Tragkugeln abwälzen, die ihrerseits eine große Laufkugel tragen. Im Unterschied zu den Rollen bzw. drehbaren Scheiben sind die Kugelrollen in der zweiten Position in Punktkontakt mit der Führungsschiene. Weiter vorzugsweise sind die Kugelrollen federgelagert, beispielsweise mit Tellerfedern. Um das auf Kugelrollen gelagerte Fußelement sicher entlang der Führungsschiene zu verfahren, ist vorteilhafterweise ein Führungsmittel derart an der Führungsschiene angeordnet, dass es eine Linearbewegung der Kugelrollen auf der Führungsschiene, trotz Punktkontakt, sicherstellt. Das Führungsmittel kann durch zwei seitliche Führungsplatten, die beidseitig der Führungsschiene angeordnet sind, realisiert werden, so dass die Führungsplatten eine Bewegung entgegen der Längsrichtung der Führungsschiene verhindern.

Das Abrollmittel kann Kugelbüchsen bzw. Wälzlager umfassen.

Vorteilhafterweise weist das Fußelement an einem vom ersten Endbereich gegenüberliegenden zweiten Endbereich eine plane Verbindungsfläche mit Rasterbohrungen auf, damit das Fußelement schnell und flexibel an einem Montagetisch oder Montageelement mit Rasterbohrungen befestigt werden kann.

Vorzugsweise umfasst das Fußelement einen U-förmigen Stützkörper, der die beiden Endbereiche des Fußelements verbindet und eine Lochstruktur aufweist. Dies ermöglicht eine hohe Tragkraft des Fußelements bei reduziertem Gewicht.

Ein Verschiebesystem kann mindestens zwei hintereinander auf der Führungsschiene angeordnete Fußelemente umfassen. Die Zahl der Fußelemente richtet sich nach der Anzahl oder Breite der zu stützenden Tischplatten oder Aufnahmeelemente. Um die Fußelemente gegen ein Kippen oder Umfallen zu sichern, kann an jedem Fußelement ein Abstützelement seitlich von der Aufstandsfläche angeordnet sein. Ein derartiges Abstützelement ist vorzugsweise so angeordnet, dass eine untere Stützfläche des Abstützelements so zu einer Bodenfläche beabstandet ist, dass ein leichtes Kippen des Fußelements zu einer Berührung des Abstützelements mit der Bodenfläche führt.

Es ist besonders vorteilhaft, wenn die Abstützelemente von zwei auf der Führungsschiene hintereinander angeordneten Fußelementen auf gegenüberliegenden Seiten der Führungsschiene angeordnet sind, da dann die Fußelement trotz der Abstützelemente kompakt zusammengeschoben werden können.

Zusammengefasst wird durch die vorliegende Erfindung ein Verschiebesystem für einen Montage- oder Schweißtisch bereitgestellt, mittels dem schwere Montagetische ohne zusätzliche Kräne oder Hubwagen schnell und einfaches verschoben werden können. Rollen oder Kugelrollen als Abrollmittel und das erfindungsgemäße Verstellmittel können platzsparend innerhalb des Fußelements untergebracht werden. Der erfindungsgemäße Rollenmechanismus erlaubt ein Verschieben des Tisches von Hand und einen schnellen Wechsel zwischen einer Rollenlagerung der Fußelemente auf der Führungsschiene und einer sicheren Flächenlagerung, in der die Fußelemente auch unter hoher Traglast sicher auf den Führungsschienen mittels der Aufstandsflächen fixiert werden können. Das erfindungsgemäße Verschiebesystem ermöglicht somit eine schnelle Anpassung des Arbeitsfeldes mit wenigen Handgriffen.

Bevorzugte Ausführungsformen der vorliegenden Erfindung werden im Folgenden beispielhaft und exemplarisch unter Bezugnahme auf die beigefügten Zeichnungen näher beschrieben.
**Fig. 1A und Fig. 1B** zeigen eine Perspektivansicht und eine Seitenansicht eines Ausführungsbeispiels des erfindungsgemäßen Verschiebesystems;
**Fig. 2A** **und** **Fig. 2B** zeigen perspektivische Unteransichten zweier Ausführungsbeispiele eines Fußelements;
**Fig. 3** zeigt eine Perspektivansicht des Fußelements der Fig. 2B;
**Fig. 4** zeigt eine Detailansicht eines Ausführungsbeispiels des Fußelements im Schnitt;
**Fig. 5** zeigt eine perspektivische Ansicht eines Ausführungsbeispiels des Verschiebesystems im Schnitt;
**Fig. 6A** **und** **Fig. 6B** zeigen eine perspektivische Ansicht und eine Vorderansicht im Schnitt eines Ausführungsbeispiels des erfindungsgemäßen Verschiebesystems;
**Fig. 7** zeigt eine perspektivische Unteransicht ohne Verfahrschiene eines Ausführungsbeispiels des Verschiebesystems;
**Fig. 8A und Fig. 8B** zeigen perspektivische Ansichten eines weiteren Ausführungsbeispiels des erfindungsgemäßen Verschiebesystems;
**Fig. 8C** zeigt eine Detailansicht des Verstellmittels gemäß einem Ausführungsbeispiels des erfindungsgemäßen Verschiebesystems; und
**Fig. 9A** **und** **Fig. 9B** zeigen eine perspektivische Schnittansicht und eine perspektivische Unteransicht eines weiteren Ausführungsbeispiels des erfindungsgemäßen Verschiebesystems.

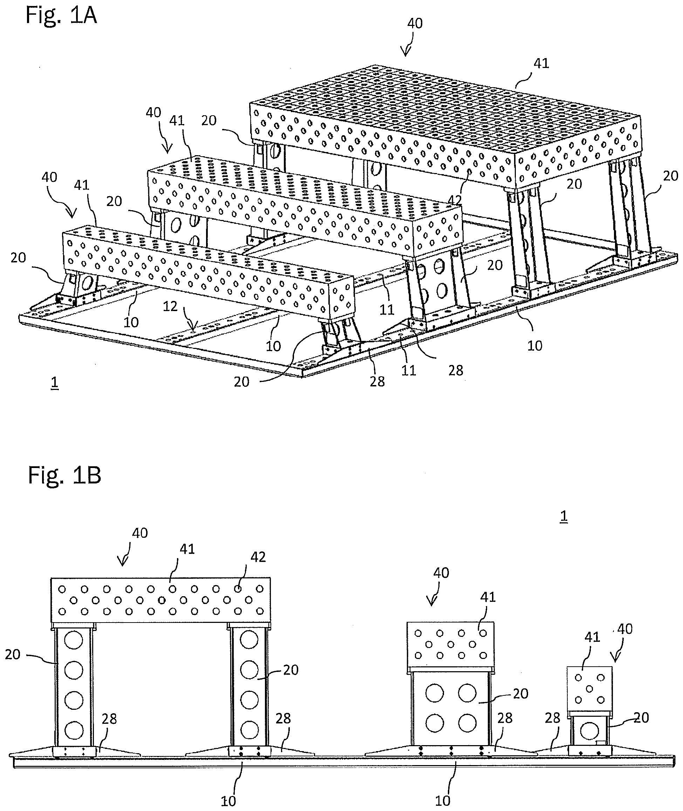

Die Figuren 1A und 1B zeigen beispielhaft eine Anordnung von Montagetischen 40 mit Tischplatten 41 unterschiedlicher Breite, die auf einem Verschiebesystem gemäß einem Ausführungsbeispiel montiert sind. Auf einer Bodenfläche sind 3 parallele Führungsschienen 10 befestigt. Die Montagetische 40, die entlang ihrer Tischplatten 41 sowie entlang der Seitenkanten angeordnete Rasterbohrungen 42 aufweisen, sind über Fußelemente 20 auf den Führungsschienen 10 befestigt.

Die Führungsschienen 10 verfügen über eine plane, obere Stützfläche 12, auf der mehrere Rasterbohrungen 11 angeordnet sind.

Durch Fußelemente 10 mit unterschiedlicher Höhe können unterschiedliche Tischhöhen realisiert werden. In den Figuren 1A und 1B sind beispielsweise Fußelemente mit Längen von 200, 400 und 600 mm gezeigt. Je nach Einsatzzweck kann eine unterschiedliche Anzahl von Führungsschienen verwendet werden. Ebenfalls kann die Anzahl der Montagetische und die Anzahl der Fußelemente je nach Bedarf beliebig gewählt werden.

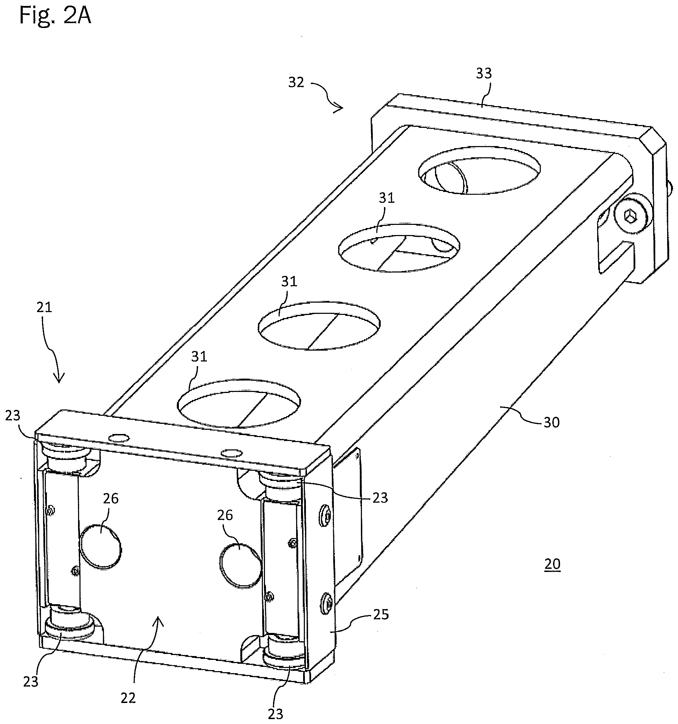

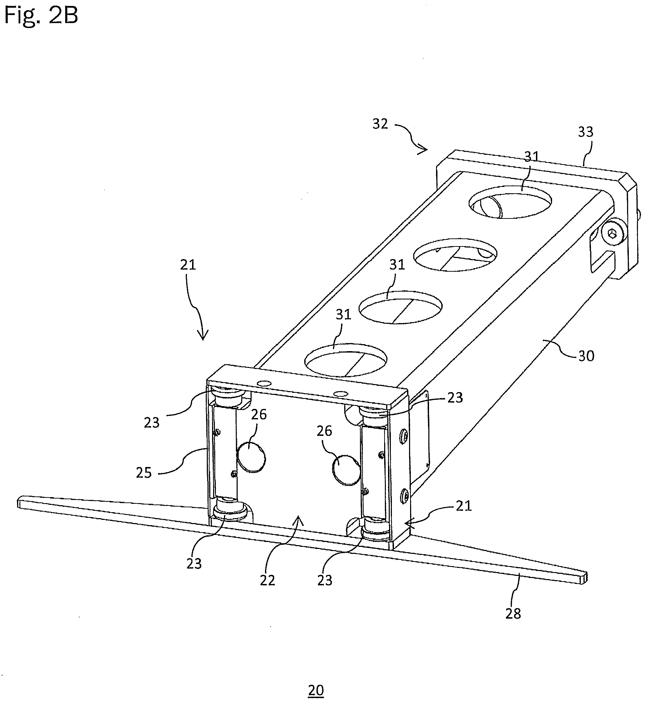

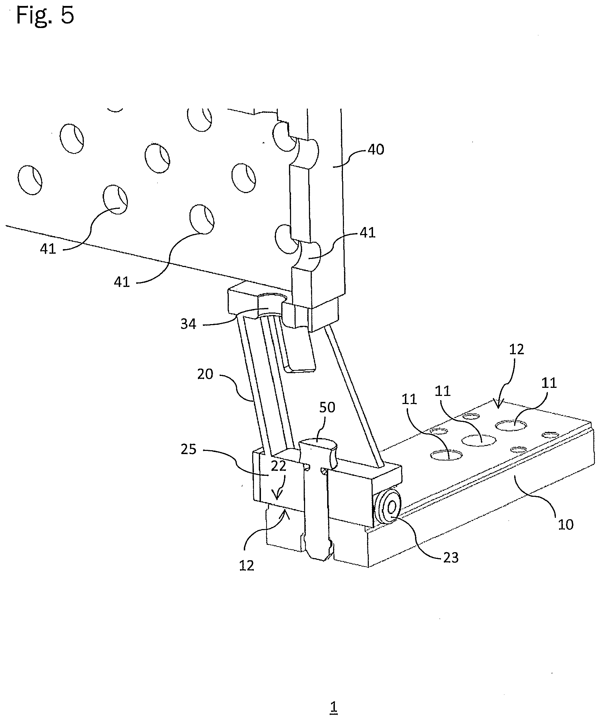

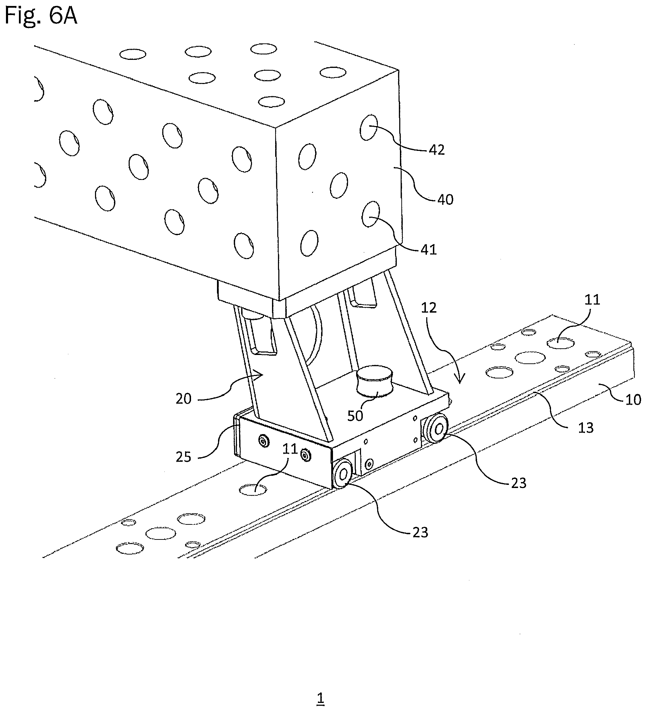

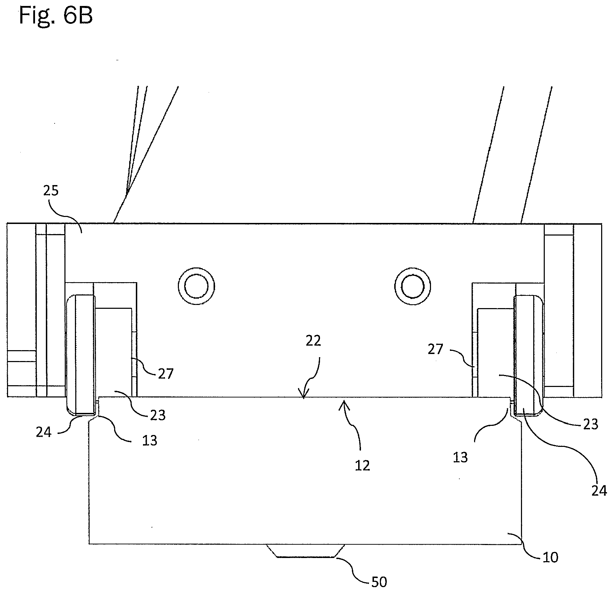

Wie in den Figuren 2A und 2B gezeigt, weisen die Fußelemente an ihrer Unterseite eine Aufstandsfläche 22 auf. In einem fixierten Zustand (der nachfolgend anhand der Figuren 5, 6A und 6B beschrieben wird) stehen die Fußelemente 20 mit der unteren Aufstandsfläche 22 auf der Stützfläche 12 der Führungsschienen 10 flächig auf.

Zusätzlich sind in die Aufstandsfläche 22 Bohrungen 26 vorgesehen, die in Überdeckung mit den Rasterbohrungen 11 der Führungsschienen 10 gebracht werden können. Mittels eines Spannbolzens 50, der in die in Überdeckung gebrachten Bohrungen eingeführt wird, können die Fußelemente 20 an der Führungsschienen 10 festgespannt und ortsfest gesichert werden.

Wie ebenfalls in den Figuren 2A und 2B gezeigt, sind die Fußelemente 10 an ihrer Unterseite mit Rollen 23 versehen, um die Fußelemente 20 im nichtfixierten Zustand in Längsrichtung der Führungsschienen linear verfahren zu können.

Die vier Rollen 23, ihre zwei Radachsen und die Aufstandsplatte 22 sind in einem Schlitten 25 untergebracht, der von vier rechteckigen Platten seitlich begrenzt wird. Die Schlittenplatten schützen gleichzeitig die Rollen 23 vor Verschmutzung und Beschädigungen.

An dem oberen Ende 23 des Fußelements 20 ist eine Verbindungsplatte 33 befestigt. Die Verbindungsplatte 33 weist Rasterbohrungen 34 auf, mit der das Fußelement an einer Tischplatte oder Aufnahmeelement 41 eines Montagetisches befestigt werden kann, beispielsweise mittels eines Spannbolzens.

Der Körper des Fußelements 20, der den oberen und unteren Endbereich verbindet, besteht aus einem plattenförmigen U-Stück 30, das eine Lochstruktur 31 aufweist. Die beschriebene Konstruktion der Fußelemente 30 ermöglicht eine leichte Konstruktion bei gleichzeitig hoher Tragkraft.

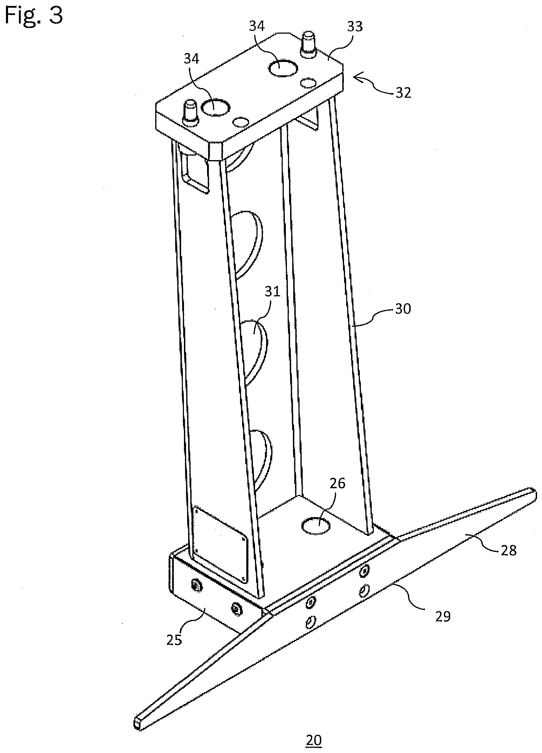

Die beiden Ausführungsbeispiele der Figuren 2A und 2B unterscheiden sich dadurch, dass das Fußelement im Figur 2B mit einem Stützelement 28 versehen ist. Um die Fußelemente 10 gegen ein Kippen oder Umfallen zu sichern, kann an den Fußelementen ein Abstützelement seitlich von der Aufstandsfläche 22 angeordnet sein. Fig. 3 zeigt eine Perspektivansicht des Fußelements mit Abstützelement 28 in aufgestellter Position. Ein derartiges Abstützelement ist vorzugsweise so angeordnet, dass eine untere Stützfläche 29 des Abstützelements 28 einen kleinen Abstand zu einer Bodenfläche aufweist, beispielsweise ca. 5 mm. Das Abstützelement ist somit derart von der Bodenfläche beabstandet, dass bereits ein leichtes Kippen des Fußelements 20, das auf der Schiene 10 steht, zu einem Aufsetzen des Stützelements 28 auf der Bodenfläche führt und dadurch das Fußelement 10 abstützt. Das Stützelement kann beispielsweise schwert- oder dreiecksförmig ausgebildet sein.

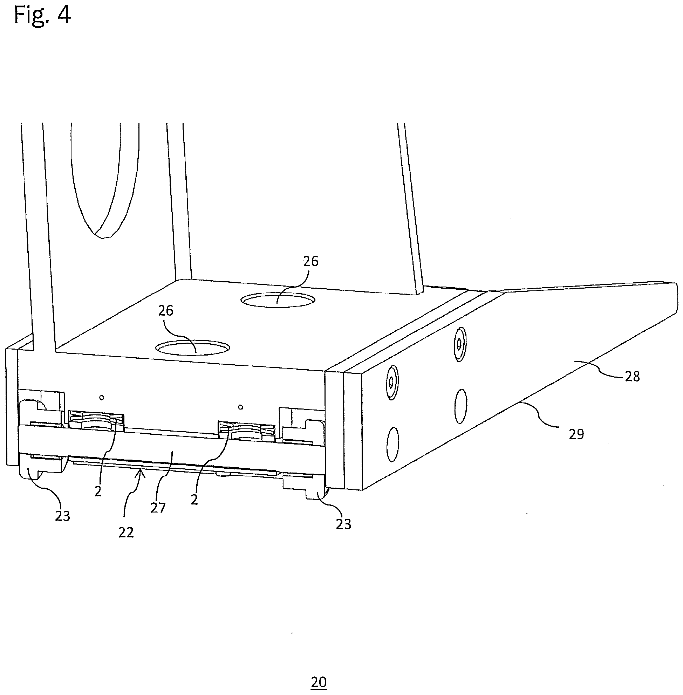

Fig. 4 zeigt eine Detailansicht eines Ausführungsbeispiels des Fußelements im Schnitt, die das als Tellerfeder ausgebildete Verstellmittel zeigt. Um das Fußelement wahlweise auf der Führungsschiene sicher zu fixieren oder entlang dieser linear verfahrbar zu machen, verfügt das Fußelement über einen Federmechanismus, der mit den Rollen 23 gekoppelt ist. Im gezeigten Ausführungsbeispiel kommen pro Radachse 27 jeweils zwei Tellerfedern 2 zum Einsatz, die so an den Radachsen 27 angeordnet sind, dass sie eine vom Spannungszustand der Federn 2 abhängige Kraft auf die Lagerachse 27 der Rollen 23 ausüben. Hierzu ist die Radachse 27 vertikal beweglich in dem Verfahrschlitten 25 gehaltert.

Wenn das Fußelement 10 nicht über einen Bolzen über die Bohrung 26 mit der Führungsschiene 10 verspannt ist, drückt die Federkraft der Tellerfedern 2 die Radachse 27 nach unten, so dass die Rollen 23 aus der Unterseite des Schlittens 25 heraustreten. Mit anderen Worten federt das Fußelement 20 durch die Federkraft hoch, so dass das Fußelement 20 nicht mehr auf der planen Aufstandsfläche 22 mit der Schiene 10 in Kontakt steht, sondern nur noch über die Rollen 23 rollengelagert ist. In diesem Zustand steht das Fußelement 10 somit nicht mehr in Flächenkontakt mit der Schiene 10, sondern nur noch in Linienkontakt über die Rollen 23.

In dem in Fig. 4 gezeigten Zustand mit Tellerfedern 2 im vorgespannten Zustand ist das Fußelement 10 mittels der Rollen 23 entlang der Führungsschiene 10 linear verfahrbar. Durch das Gewicht des Fußelements und der Tischplatte sind die Tellerfedern 2 nie im komplett ungespannten Zustand.

Die Figuren 5, 6A und 6B zeigen das Verschiebesystem im fixierten Zustand. Hier ist das Fußelement 10 über einen Spannbolzen 50 mit der Führungsschiene 10 verspannt. Durch Anziehen des Bolzens werden die Tellerfedern 2 weiter zusammengedrückt und ausgehend von dem vorgespannten Zustand weiter gespannt. Dadurch bewegt sich die Achse 27 mit den Rollen 23 etwas nach oben. Im gespannten Zustand mit Spannbolzen setzt das Fußelement 20 mit der Aufstandsfläche 22 auf der Stützfläche 12 der Führungsschiene 10 auf und steht mit dieser in Flächenkontakt. Mit anderen Worten tauchen die Rollen in den Fahrschlitten, wenn die Spannkraft durch den Bolzen die Vorspannkraft der Federn 2 übersteigt.

Die Schnittansicht der Fig. 6B zeigt, dass die Führungsschiene 10 eine Spurausnehmung 13 aufweist, auf der die Rolle 23 mit ihrem Spurkranz 24 aufsetzt und darin geführt wird.

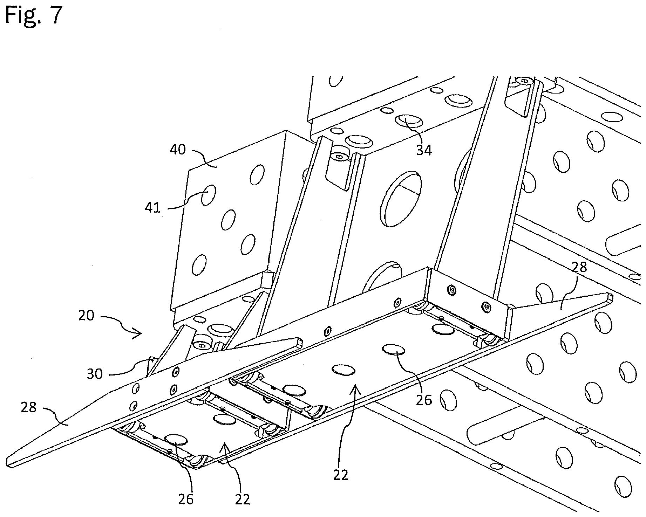

Fig. 7 zeigt eine perspektivische Unteransicht ohne Verfahrschiene 10 von zwei hintereinander angeordneten Fußelementen. Die Ansicht der Fig. 7 illustriert, wie durch die versetzte Anordnung der Abstützelemente 28 zweier hintereinander angeordneter Fußelemente 20 diese kompakt zusammengeschoben werden können. Diese vorteilhafte Anordnung ist auch in Figur 1A ersichtlich.

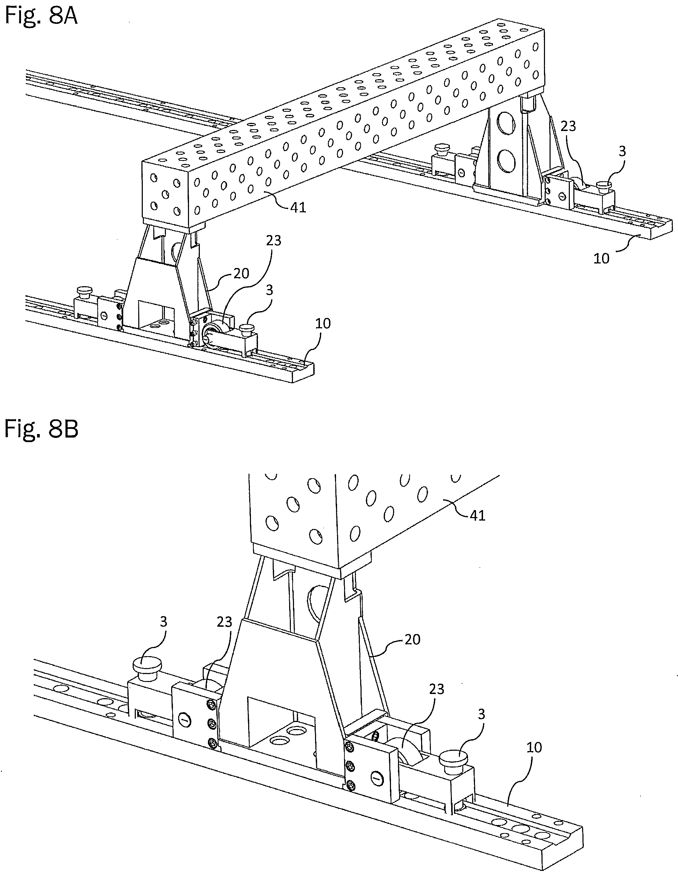

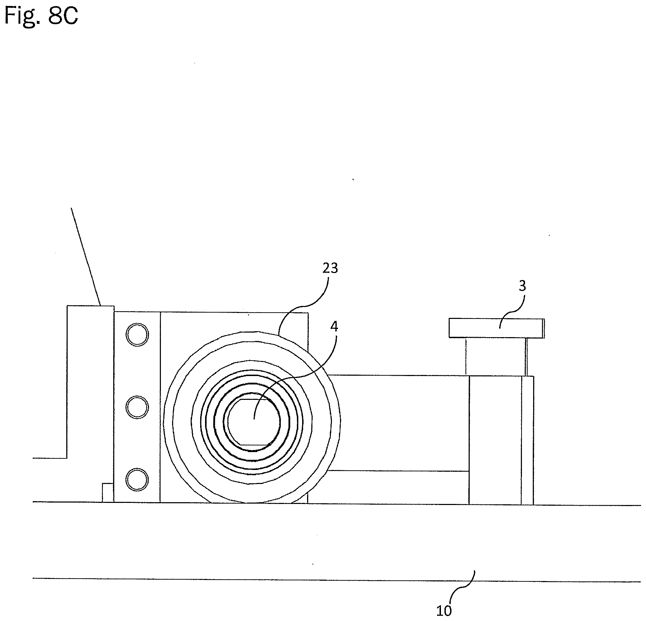

Ein weiteres Ausführungsbeispiel eines Fußelements ist in den Figuren 8A, 8B und 8C gezeigt. Gemäß diesem Ausführungsbeispiel wird als Verstellmittel ein Exzenter 4, der über einen Griff 3 betätigt wird, verwendet. Der Exzenter 4, wie in Figur 8C dargestellt, kann über ein Ziehen am Griff 3 gedreht werden, beispielsweise um 90°. Der Exzenter ist mit der Gabel der Lagerachse (nicht gezeigt) derart gekoppelt, dass durch die Drehbewegung des Exzenters 4 die Lagerachse angehoben bzw. gesenkt werden kann. Somit wird durch den Exzenter 4 eine Hubbewegung auf die Lagerachse und damit die Rollen 23 übertragen. Hierzu ist eine kleine Hubbewegung um Millimeterbereich ausreichend, um die Rollen von der ersten in die zweite Position bzw. von der zweiten in die erste Position zu bewegen.

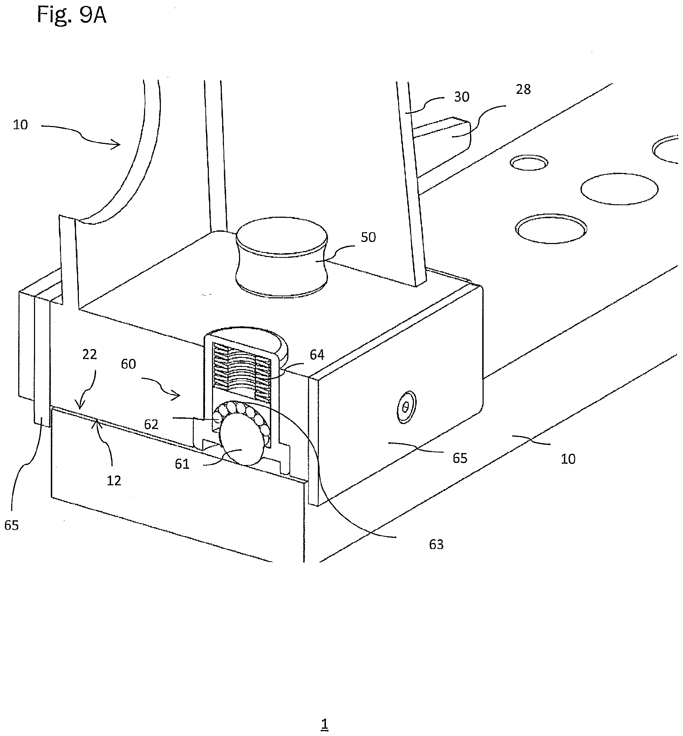

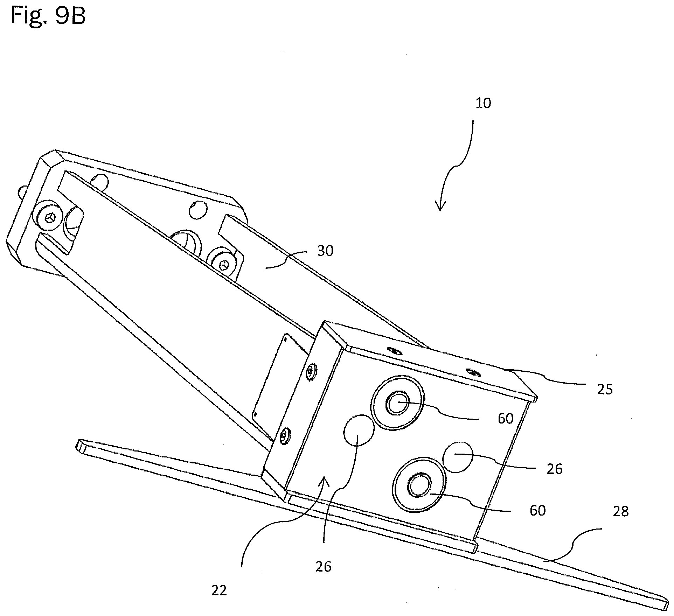

Ein weiteres Ausführungsbeispiel eines Fußelements ist in den Figuren 9A und 9B gezeigt, wo als Abrollmittel anstelle der Rollen 23 gefederte Kugelrollen 60 verwendet werden. Eine Kugelrolle 60 umfasst ein Gehäuse mit einer gehärteten Kugelpfanne 63 auf der sich viele kleine Tragkugeln 62 abwälzen, die ihrerseits eine große Laufkugel 61 tragen. Oberhalb der Kugeln 62, 63 ist eine Tellerfederanordnung 64 vorgesehen, die eine Federkraft auf die Kugelrolle 60 ausübt. Ähnlich wie die Rollen 23 sind die Kugelrollen 60 vertikal beweglich gehaltert und mit der Tellerfederanordnung gekoppelt, so dass diese durch Verspannen der Aufstandsfläche 22 des Fußelements 10 mit der Stützfläche 12 der Führungsschiene 10 vertikal in den Fahrschlitten einfahren. Wird der Bolzen 50 gelöst, dann geht die Tellerfederanordnung 64 in den vorgespannten Zustand über, bei dem die Kugelrollen 60 das Fußelement 10 hochfedern, so dass die Aufstandsfläche 22 des Fußelements 10 mit der Stützfläche 12 der Führungsschiene 10 nicht mehr in Kontakt steht, sondern das Fußelement 10 über die Kugelrollen 60 punktgelagert ist. Die Punktlagerung würde eine Bewegung in X- und Y- Richtung ermöglichen. Daher sind Führungsplatten 65 vorgesehen, die eine Linearbewegung der Kugelrollen in Längsrichtung der Führungsschiene 10 sicherstellen und damit eine lineare Verfahrbewegung des Fußelements. Wie in Figur 9A ersichtlich, sind die Führungsplatten 65 hierzu links- und rechtsseitig der Führungsschiene 10 so angeordnet, dass sie die Seitenflächen der Führungsschiene zumindest teilweise überdecken. Im vorgespannten Zustand dient die Tellerfederanordnung 64 ähnlich wie die Tellerfedern 2 der Fig. 4 als Schutzmechanismus um das Abrollmittel gegen Stöße, Abnutzung etc. zu schützen. Figur 9B zeigt eine Unteransicht der Figur 9A. In dem Ausführungsbeispiel werden mindestens zwei Kugelrollen 60 verwendet, die relativ zur Aufstandsfläche 22 diagonal versetzt angeordnet sind, um eine ausreichende Stabilität beim Verfahren sicherzustellen. Es können jedoch auch mehr als zwei Kugelrollen pro Fuß in unterschiedlichsten Anordnungen eingesetzt werden. Um ein Kippen des Fußes 20 zu verhindern, ist wiederum ein Abstützelement 28 seitlich zur Aufstandsfläche 22 angeordnet. Anstatt der Kugelrollen 60 können auch Kugelbüchsen bzw. Wälzlager eingesetzt werden.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorgegebener Vorrichtungsparameter auch in anderen Kombinationen eingesetzt werden.

## Patentansprüche

1. Verschiebesystem für einen Montage- oder Schweißtisch, umfassend:
ein Fußelement (20) für einen Montage- oder Schweißtisch (40), das an einem ersten Endbereich (21) mit einer Führungsschiene (10) in Kontakt bringbar ist, wobei an dem ersten Endbereich (21) eine Aufstandsfläche (22) und ein Abrollmittel angeordnet sind; und
ein Verstellmittel, das mit dem Abrollmittel gekoppelt ist,
wobei mittels des Verstellmittels das Abrollmittel von einer ersten Position relativ zur Aufstandsfläche (22) in eine zweite Position relativ zur Aufstandsfläche (22) gebracht werden kann,
wobei in der ersten Position die Aufstandsfläche (22) mit der Führungsschiene (10) flächig in Kontakt steht und wobei in der zweiten Position das Fußelement (20) auf der Führungsschiene (10) auf dem Abrollmittel gelagert ist und mittels des Abrollmittels entlang der Führungsschiene (10) linear verfahrbar ist,
**dadurch gekennzeichnet, dass** das Verschiebesystem ferner eine Führungsschiene (10) mit Rasterbohrungen (11) umfasst.

2. Verschiebesystem nach Anspruch 1, wobei das Verstellmittel eine Feder umfasst, die so angeordnet ist, dass sie eine vom Spannungszustand der Feder abhängige Kraft auf das Abrollmittel ausübt.

3. Verschiebesystem nach Anspruch 2, wobei die Feder als Tellerfeder (2) ausgebildet ist.

4. Verschiebesystem nach einem der vorhergehenden Ansprüche, wobei der erste Endbereich (21) eine Bohrung (26) oder ein Langloch umfasst, die so angeordnet sind, dass sie mit einer Rasterbohrung (11) der Führungsschiene (10) in Überdeckung gebracht werden kann, wenn das Fußelement (20) in der ersten Position auf der Führungsschiene (10) angeordnet ist.

5. Verschiebesystem nach Anspruch 4, wenn abhängig von Anspruch 2 oder 3, wobei die Feder derart angeordnet ist, dass sie mittels eines Spannbolzens (50), der in die in Überdeckung angeordneten Bohrungen (26,11) des ersten Endbereichs (21) und der Führungsschiene (10) geführt ist, in einen gespannten Zustand überführt und dadurch das Abrollmittel von der zweiten in die erste Position bewegt wird.

6. Verschiebesystem nach Anspruch 1 oder 4, wobei das Verstellmittel einen Extender (4) umfasst, der derart mit dem Abrollmittel gekoppelt ist, dass eine Bewegung des Extenders (4) ein Herausschwenken des Abrollmittels von der ersten in die zweite Position oder von der zweiten in die erste Position bewirkt.

7. Verschiebesystem nach einem der vorhergehenden Ansprüche, wobei das Abrollmittel Rollen (23) umfasst.

8. Verschiebesystem nach Anspruch 7, wobei die Rollen (23) als Spurkranzrollen ausgebildet sind, um die Rollen linear entlang der Führungsschiene mittels eines Spurkranzes (13) zu führen.

9. Verschiebesystem nach einem der vorhergehenden Ansprüche 1-6, wobei das Abrollmittel mindestens zwei Kugelrollen (60) und Führungsmittel umfasst, wobei die Führungsmittel (65) derart an der Führungsschiene (10) angeordnet sind, dass sie eine Linearbewegung der Kugelrollen (60), die in der zweiten Position jeweils in Punktkontakt mit der Führungsschiene (10) stehen, auf der Führungsschiene (10) sicherstellen.

10. Verschiebesystem nach einem der vorhergehenden Ansprüche, wobei an dem Fußelement (20) ein Abstützelement (28) seitlich von der Aufstandsfläche (22) angeordnet ist, derart, dass ein Kippen des Fußelements (20) verhindert wird.

11. Verschiebesystem nach einem der vorhergehenden Ansprüche, umfassend mindestens zwei hintereinander auf der Führungsschiene (10) angeordnete Fußelemente (20), wobei an jedem Fußelement (20) ein Abstützelement (28) seitlich von der Aufstandsfläche (22) angeordnet ist, derart, dass ein Kippen des Fußelements (20) verhindert wird, wobei die Abstützelemente (28) von zwei hintereinander angeordneten Fußelementen (20) auf gegenüberliegenden Seiten der Führungsschiene (10) angeordnet sind.

## Claims

1. A displacement system for an assembly or welding table, comprising:
a foot element (20) for an assembly or welding table (40), which can be brought into contact with a guide rail (10) at a first end region (21), wherein a contact area (22) and a rolling means are arranged at said first end region (21); and
an adjustment means which is coupled to said rolling means,
wherein said rolling means can be brought from a first position relative to said contact area to a second position relative to said contact area (22) using said adjustment means, and
wherein, in said first position, said contact area (22) is in contact with said guide rail (10) in a planar fashion, and, in said second position, said foot element (20) on said guide rail (10) is supported on said rolling means and is linearly displaceable along said guide rail (10) using said rolling means,
**characterized in that** said displacement system further comprises a guide rail (10) having grid holes (11).

2. The displacement system according to claim 1, wherein said adjustment means comprises a spring which is arranged in such a way that it exerts a force on said rolling means, said force depending on the tensioning state of said spring.

3. The displacement system according to claim 2, wherein said spring is formed as a disk spring (2).

4. The displacement system according to any one of the preceding claims, wherein said first end region (21) comprises a bore (26) or an elongated hole, which are arranged such that they can be superposed with a grid hole (11) of said guide rail (10) when said foot element (20) is arranged in said first position on said guide rail (10).

5. The displacement system according to claim 4, if dependent on claim 2 or 3, wherein said spring is arranged such that it is converted into a tensioned state by means of a clamping bolt (50) which is guided into said superposed bores (26, 11) of said first end region and said guide rail (10) so as to move said rolling means from said second position to said first position.

6. The displacement system according to claim 1 or 4, wherein said adjustment means comprises an extender (4) which is coupled to said rolling means such that a movement of the extender (4) causes said rolling means to swivel out from said first position to said second position or from said second position to said first position.

7. The displacement system according to any one of the preceding claims, wherein said rolling means comprises rollers (23).

8. The displacement system according to claim 7, wherein said rollers (23) are formed as flange rollers to guide said rollers linearly along said guide rail by means of a flange (13).

9. The displacement system according to any one of the preceding claims 1-6, wherein said rolling means comprises at least two ball rollers (6) and guide means, wherein said guide means (65) are arranged on said guide rail (10) such that they ensure a linear movement of said ball rollers (60), each of which are in point contact with said guide rail (10) in the second position, on said guide rail (10).

10. The displacement system according to any one of the preceding claims, wherein a support element (28) is arranged laterally with respect to said contact area (22) on said foot element (20) so as to prevent tilting of said foot element (20).

11. The displacement system according to any one of the preceding claims, comprising at least two foot elements (20) arranged on said guide rail (10) one behind the other, wherein a support element (28) is arranged laterally with respect to said contact area (22) on each foot element (20 so as to prevent tilting of said foot element (20), wherein the support elements (28) of two foot elements (20) disposed one behind the other are arranged on opposite sides of said guide rail (10).

## Revendications

1. Système de déplacement d'une table de montage ou de soudage, comportant :
un élément de pied (20) pour une table de montage ou de soudage (40), dont une première zone d'extrémité (21) est susceptible d'être mise en contact avec un rail de guidage (10), une surface de support (22) et un moyen de roulement étant agencés sur la première zone d'extrémité (21) ;
et
un moyen de réglage couplé au moyen de roulement,
dans lequel le moyen de roulement est susceptible d'être amené depuis une première position relative à la surface de support (22) jusque dans une seconde position relative à la surface de support (22) à l'aide du moyen de réglage,
dans lequel, dans la première position, la surface de support (22) est en contact surfacique avec le rail de guidage (10), et dans la seconde position l'élément de pied (20) est monté sur le rail de guidage (10) sur le moyen de roulement et est déplaçable linéairement le long du rail de guidage (10) à l'aide du moyen de roulement,
**caractérisé en ce que**
le système de déplacement comprend en outre un rail de guidage (10) pourvu de perçages de trame (11).

2. Système de déplacement selon la revendication 1, dans lequel le moyen de réglage comprend un ressort qui est agencé de manière à exercer une force sur le moyen de roulement, qui dépend de l'état de tension du ressort.

3. Système de déplacement selon la revendication 2, dans lequel le ressort est réalisé sous forme de rondelle-ressort (2).

4. Système de déplacement selon l'une des revendications précédentes, dans lequel la première zone d'extrémité (21) comprend un perçage (26) ou un trou oblong qui est agencé de manière à pouvoir venir en chevauchement avec un perçage de trame (11) du rail de guidage (10) lorsque l'élément de pied (20) est disposé dans la première position sur le rail de guidage (10).

5. Système de déplacement selon la revendication 4 prise en dépendance de la revendication 2 ou 3, dans lequel le ressort est agencé de manière à être transféré dans un état tendu à l'aide d'un boulon de serrage (50) guidé dans les perçages (26, 11) de la première zone d'extrémité (21) et du rail de guidage (10), disposés en chevauchement, suite à quoi le moyen de roulement est déplacé depuis la seconde position jusque dans la première position.

6. Système de déplacement selon la revendication 1 ou 4, dans lequel le moyen de réglage comprend un extenseur (4) qui est couplé au moyen de roulement de telle sorte qu'un mouvement de l'extenseur (4) provoque un pivotement du moyen de roulement pour passer depuis la première vers la seconde position ou depuis la seconde vers la première position.

7. Système de déplacement selon l'une des revendications précédentes, dans lequel le moyen de roulement (23) comprend des galets.

8. Système de déplacement selon la revendication 7, dans lequel les rouleaux (23) sont réalisés sous forme de galets à boudin pour guider les galets linéairement le long du rail de guidage à l'aide d'un boudin (13).

9. Système de déplacement selon l'une des revendications précédentes 1 à 6, dans lequel le moyen de roulement comprend au moins deux galets sphériques (60) et des moyens de guidage, les moyens de guidage (65) étant agencés sur le rail de guidage (10) de manière à assurer un mouvement linéaire des galets sphériques (60) qui sont chacun en contact ponctuel avec le rail de guidage (10) dans la seconde position, sur le rail de guidage (10).

10. Système de déplacement selon l'une des revendications précédentes, dans lequel, sur l'élément de pied (20), un élément d'appui (28) est agencé latéralement à côté de la surface de support (22) de manière à empêcher un basculement de l'élément de pied (20).

11. Système de déplacement selon l'une des revendications précédentes, comprenant au moins deux éléments de pied (20) agencés l'un derrière l'autre sur le rail de guidage (10), sur chaque élément de pied (20) étant prévu un élément d'appui (28) latéralement à côté de la surface de support (22) de manière à empêcher un basculement de l'élément de pied (20), les éléments d'appui (28) de deux éléments de pied (20) agencés l'un derrière l'autre étant agencés sur des côtés opposés du rail de guidage (10).
